# EUROPÄISCHE PATENTANMELDUNG

(11) **EP 4 282 738 A1**
(43) Veröffentlichungstag der Anmeldung: **29.11.2023**
(21) Anmeldenummer: 23159937.4
(22) Anmeldetag: 03.03.2023
(51) Int. Cl.: B62D 63/02, B62D 65/00

(54) **BAUKASTENSYSTEM FÜR KRAFTFAHRZEUGE, VERFAHREN ZUR HERSTELLUNG EINES KRAFTFAHRZEUGS UND KRAFTFAHRZEUG**

(30) Priorität: 25.05.2022 DE 102022205232
(71) Anmelder: VOLKSWAGEN AG, 38440 Wolfsburg (DE)
(72) Erfinder: Kosfeld, Uwe, 49078 Osnabrück (DE)

(57) **Zusammenfassung**

Um ein Baukastensystem für Kraftfahrzeuge bereitzustellen, mittels welchem der Entwicklungs- und Herstellungsaufwand auch für Kleinserienfahrzeuge soweit reduziert werden kann, dass diese wirtschaftlich produzierbar sind, wird ein Baukastensystem (100) für Kraftfahrzeuge, insbesondere für batterieelektrische Kraftfahrzeuge, vorgeschlagen, umfassend einen Grundbaukasten (10), einen Derivatbaukasten (11) und einen Designbaukasten (12), wobei der Grundbaukasten (10) Module (15) zum Aufbau mindestens einer Basiskonfiguration (16) für ein Kraftfahrzeug (200) einer vorbestimmten Fahrzeugklasse umfasst, wobei die Module (15) des Grundbaukastens (10) eine Basis-Karosseriestruktur (18), eine Fahrwerksstruktur (17) und einen Antrieb (19) umfassen, wobei der Derivatbaukasten (11) Aufbaumodule (20) zur Ausprägung mindestens einer derivaten Karosseriebauform (21, 21a, 21b, 21c) der Basiskonfiguration (16) umfasst, und wobei der Designbaukasten (12) Designmodule (25) zur Ausprägung mindestens eines fahrzeug- oder markenspezifischen Designs der derivaten Karosseriebauform (21, 21a, 21b, 21c) umfasst, wobei die Designmodule (25) Komponenten für ein Fahrzeugexterieur umfassend eine Fahrzeugaußenhaut umfassen.

## Beschreibung

ie vorliegende Erfindung betrifft ein Baukastensystem für Kraftfahrzeuge, insbesondere für batterieelektrische Fahrzeuge.

Ferner betrifft die vorliegende Erfindung ein Verfahren zur Herstellung eines Kraftfahrzeugs unter Verwendung eines Baukastensystems sowie ein Kraftfahrzeug hergestellt mit einem solchen Verfahren.

Zur Nutzung von Synergien und zur Kostensenkung sind im Kraftfahrzeugbereich modulare Baukastenlösungen bekannt, bei denen Baugruppen über verschiedene Fahrzeugplattformen hinweg eingesetzt werden. Der "Modulare E-Antriebs-Baukasten" (MEB) der Anmelderin stellt eine derartige modulare Lösung dar, welche jedoch ausschließlich die Fahrzeugplattform betrifft. Beim MEB wird die Antriebsbatterie in einem stabilen Rahmen zwischen den Achsen im Wagenboden platziert, und der E-Motor und die Leistungselektronik werden an der Vorderund/oder Hinterachse angeordnet. Darauf können äußerlich unterschiedliche Karosserien aufgebaut werden.

Aus der EP 0 142 581 A1 ist eine modulare Struktur bekannt, die aus Komponenten gebildet wird, die, wenn sie zusammengebaut werden, das Grundchassis eines Kraftfahrzeuges bilden, an das eine Karosserie in ausgewählter Konfiguration angebracht werden kann, um ein Automobil in jedem gewünschten Stil zu schaffen. Die Struktur besteht aus identischen vorderen und hinteren Fahrgestellen, die mit den gegenüberliegenden Enden einer Bodenwanne verbunden sind, auf der Sitze montiert sind.

Die DE 10 2011 053 254 A1 offenbart ein Baukastensystem für ein modular aufgebautes Elektrofahrzeug, mit einer Basiseinheit, umfassend einen Rahmen, ein Fahrwerk, zumindest eine Antriebseinrichtung, Bremsen und eine Lenkung sowie mit einem mit der Basiseinheit kombinierbaren Aufbau, der entweder als Sportversion, als Limousinenversion oder als Kombiversion/Van/SUV ausgebildet ist.

Die US 4,842,326 A offenbart modulare Kraftfahrzeuge mit einer Vielzahl von unabhängig voneinander betreibbaren, funktional unterschiedlichen PKW- oder LKW-artigen Kernfahrzeugen und einer Vielzahl von austauschbaren, funktional unterschiedlichen Karosserie- und Fahrgestellmodulen, die an den Kernfahrzeugen befestigt werden können.

Mit den bekannten modularen Lösungen können die Entwicklungs- und Herstellungskosten für Kraftfahrzeuge mit einem hohen Absatzvolumen gesenkt werden. Viele Fahrzeugprojekte wie Konzeptfahrzeuge, welche auf Fahrzeugmessen gezeigt werden, finden jedoch oft trotz hohem Zuspruch und grundsätzlicher technischer Machbarkeit nicht den Weg in die Serie, da die prognostizierten Absatzvolumina vergleichsweise gering sind. Auch der Einsatz der bekannten modularen Lösungen ist nicht ausreichend, um derartige Fahrzeugprojekte in eine wirtschaftliche Serienfertigung zu überführen.

Der vorliegenden Erfindung liegt die Aufgabe zugrunde, ein Baukastensystem für Kraftfahrzeuge bereitzustellen, mittels welchem der Entwicklungs- und Herstellungsaufwand auch für Kleinserienfahrzeuge soweit reduziert werden kann, dass diese wirtschaftlich produzierbar sind.

Zur Lösung der der Erfindung zugrundeliegenden Aufgabe wird ein Baukastensystem für Kraftfahrzeuge, insbesondere für batterieelektrische Kraftfahrzeuge, vorgeschlagen, umfassend einen Grundbaukasten, einen Derivatbaukasten und einen Designbaukasten, wobei der Grundbaukasten Module zum Aufbau mindestens einer Basiskonfiguration für ein Kraftfahrzeug einer vorbestimmten Fahrzeugklasse umfasst, wobei die Module des Grundbaukastens eine Basis-Karosseriestruktur, eine Fahrwerksstruktur und einen Antrieb umfassen, wobei der Derivatbaukasten Aufbaumodule zur Ausprägung mindestens einer derivaten Karosseriebauform der Basiskonfiguration umfasst, und wobei der Designbaukasten Designmodule zur Ausprägung mindestens eines fahrzeug- oder markenspezifischen Designs der derivaten Karosseriebauform umfasst, wobei die Designmodule Komponenten für ein Fahrzeugexterieur umfassend eine Fahrzeugaußenhaut umfassen.

Die Erfindung geht dabei von der Erkenntnis aus, dass trotz geringer prognostizierter Absatzzahlen die emotionale Wirkung besonderer Fahrzeugprojekte auf den Kunden so groß ist, dass es markentechnisch sinnvoll sein kann, solche Fahrzeugprojekte in die Kleinserie zu überführen. Ferner beruht die Erfindung auf der Erkenntnis, dass die prognostizierten Absatzzahlen solcher Fahrzeugprojekte erhöht werden können, wenn die Fahrzeuge in verschiedenen derivaten Karosseriebauformen angeboten oder im Konzernverband von mehreren Herstellern mit der jeweiligen unverwechselbaren Design- und Markenidentität hergestellt werden.

Das erfindungsgemäße Baukastensystem umfasst daher einen Grundbaukasten, einen Derivatbaukasten und einen Designbaukasten. Mittels der Module des Grundbaukastens kann eine Basiskonfiguration für ein Kraftfahrzeug einer vorbestimmten Fahrzeugklasse aufgebaut werden. Unter einer Basiskonfiguration für ein Kraftfahrzeug einer vorbestimmten Fahrzeugklasse wird eine im Wesentlichen fahrtüchtige Kraftfahrzeugstruktur verstanden, welche alle wesentlichen strukturtragenden und sicherheitsrelevanten Elemente umfasst. Die Basiskonfiguration ist dabei aber weder hinsichtlich derivater Karosserieformen noch markenoder fahrzeugtypischer Designaspekte hin ausgeprägt. Die Module des Grundbaukastens umfassen daher eine Basis-Karosseriestruktur, eine Fahrwerkstruktur und einen Antrieb, aus denen die Basiskonfiguration aufbaubar ist. Zur weiteren Ausprägung des Kraftfahrzeugs dient der Derivatbaukasten, welcher Aufbaumodule zur Ausprägung mindestens einer derivaten Karosseriebauform der Basiskonfiguration umfasst. So kann beispielsweise in der Sportwagenklasse eine Basiskonfiguration aus den Modulen des Grundbaukastens aufgebaut werden. Die entsprechende Basis-Karosseriestruktur kann dann strukturell für ein offenes Kraftfahrzeug, insbesondere einen offenen Sportwagen, ausgelegt sein. Die Basiskonfiguration kann ferner hinsichtlich derivater Karosseriebauformen wie z.B. Coupe, Cabrio oder Targa ausgeprägt werden. Hierzu dient der Derivatbaukasten, dessen Aufbaumodule mit der Basiskonfiguration kombiniert werden können, um eine der derivaten Karosseriebauformen aufzubauen. Im vorbeschriebenen Beispiel können die Aufbaumodule Dachmodule sein, welche mit der Basiskonfiguration kombiniert werden, um die genannten derivaten Karosseriebauformen herzustellen. Der mit den Aufbaumodulen versehenen Basiskonfiguration fehlt es jedoch noch an der fahrzeug- und/oder markenspezifischen designtragenden Hülle. Zu diesem Zweck ist der Designbaukasten umfassend die Designmodule vorgesehen. Diese Designmodule können an die derivate Karosseriebauform der Basiskonfiguration anmontiert oder fest gefügt werden und verleihen dem Fahrzeug die markenspezifische und/oder fahrzeugspezifische Ausgestaltung. Die Designmodule des Designbaukastens umfassen insbesondere die wahrnehmbaren Oberflächen des Exterieurs und gegebenenfalls auch größtenteils die des Interieurs des Fahrzeuges, welche grundsätzlich marken- oder fahrzeugspezifisch sind. Die Designmodule umfassen dabei mindestens die Fahrzeugaußenhaut und/oder die Fahrzeugoberflächen, welche gewissermaßen die designtragende Ebene des Fahrzeuges darstellt.

Das erfindungsgemäße Baukastensystem ist insbesondere für Klein- und Kleinstserienfahrzeuge einsetzbar. Durch die aus dem Grundbaukasten herstellbare Basiskonfiguration wird eine Fahrzeugbasis geschaffen, welche hinsichtlich derivater Karosseriebauformen und/oder verschiedener Hersteller im Konzernverband individualisiert werden kann. Da die Basiskonfiguration bereits eine fahrtüchtige Kraftfahrzeugstruktur darstellt, welche alle wesentlichen strukturtragenden und sicherheitsrelevanten Elemente umfasst, trägt der Grundbaukasten den Großteil der Entwicklungs- und Herstellungskosten, welche somit auf eine größere Zahl an absetzbaren Fahrzeugen mit unterschiedlichen derivaten Karosseriebauformen und/oder von verschiedenen Herstellern umgelegt werden können. Da die Aufbaumodule des Derivatbaukastens und die Designmodule des Designbaukastens nicht strukturtragend oder sicherheitsrelevant sind - diese können jedoch gegebenenfalls strukturoder sicherheitsunterstützend sein - sind die Kosten für die Individualisierung des Kraftfahrzeugs vergleichsweise gering.

Das Baukastensystem ist für alle Kraftahrzeuge geeignet, wie beispielsweise batterieelektrische Kraftfahrzeuge, Hybridelektrokraftfahrzeuge, Kraftfahrzeuge mit Verbrennungskraftmaschine oder Kraftfahrzeuge mit Wasserstoff-Brennstoffzelle.

Bevorzugt kann vorgesehen sein, dass der Grundbaukasten Module zum Aufbau genau einer Basiskonfiguration für ein Kraftfahrzeug der vorbestimmten Fahrzeugklasse umfasst.

Zur weiteren Erhöhung der Wirtschaftlichkeit kann daher vorgesehen sein, dass der Grundbaukasten derart standardisiert ist, dass mit diesem ausschließlich und genau eine Basiskonfiguration für ein Kraftfahrzeug der vorbestimmten Fahrzeugklasse aufgebaut werden kann.

Ist beispielsweise die vorbestimmte Fahrzeugklasse die Sportwagenklasse, so kann genau eine Basiskonfiguration für ein Kraftfahrzeug der Sportwagenklasse aufgebaut werden, welche bevorzugt für ein offenes Kraftfahrzeug ausgelegt ist.

Zu diesem Zwecke kann vorgesehen sein, dass die Basis-Karosseriestruktur eine einheitliche und/oder universelle Karosseriezelle für ein Kraftfahrzeug der vorbestimmten Fahrzeugklasse ist.

Aufgrund der einheitlichen und/oder universellen Karosseriezelle für den Grundbaukasten kann der Entwicklungs- und Herstellungsaufwand deutlich reduziert werden, da die einheitliche und/oder universelle Karosseriezelle für eine Vielzahl von derivaten Karosseriebauformen beziehungsweise markenspezifischen Designs eingesetzt werden kann.

Mit weiterem Vorteil kann vorgesehen sein, dass der Grundbaukasten eine Crash-Struktur und/oder Gurte und/oder eine Sitzstruktur und/oder ein Vorderwagenpackage und/oder eine Stirnwand und/oder eine Lenkung und/oder einen Windschutzrahmen und/oder eine Frontscheibe und/oder eine A-Säule und/oder eine Türstruktur und/oder eine Seitenscheibentonne und/oder eine, bevorzugt geometrisch angepasste, weiter bevorzugt L-förmige, Traktionsbatterie und/oder einen Kraftstoffbehälter und/oder einen Gasspeicher und/oder eine Fahrzeugsensorik und/oder eine Fahrzeugelektrik umfasst.

Der Grundbaukasten kann somit sämtliche technisch relevanten und strukturtragenden Komponenten zum Aufbau der Basiskonfiguration umfassen.

Mit weiterem Vorteil kann vorgesehen sein, dass der Grundbaukasten einen Plattformbaukasten umfasst, wobei der Plattformbaukasten Plattformmodule und/oder Komponenten für die Fahrwerksstruktur und/oder für den Antrieb umfasst.

Ein derartiger Plattformbaukasten wird beispielsweise durch den Modularen E-Antriebs-Baukasten (MEB) der Anmelderin bereitgestellt. Mittels des Plattformbaukastens kann eine Fahrzeugplattform, umfassend ein Fahrgestell, einen Antrieb und Traktionsbatterien aufgebaut werden. Durch die Integration eines Plattformbaukastens in den Grundbaukasten können für Großserienfahrzeuge entwickelte Bauteile auch in der Klein- oder Kleinstserie eingesetzt werden und die mit dem Plattformbaukasten bereitgestellten Kosten- und Effizienzvorteile auf das Baukastensystem übertragen werden.

Mit weiterem Vorteil kann vorgesehen sein, dass die Basiskonfiguration ein fahrbares Kraftfahrzeug ist.

Wie bereits vorstehend erläutert, stellt die Basiskonfiguration somit ein grundsätzliches fahrtüchtiges Kraftfahrzeug dar, welches jedoch nicht fahrfertig im Sinne eines zulassungsfähigen Kraftfahrzeugs ist. Darüber hinaus ist die Basiskonfiguration für den Kunden weder einem spezifischen Fahrzeug noch einem spezifischen Hersteller zuordbar, da dieser noch die Ausprägung der derivaten Karosseriebauform und die designtragende Hülle fehlt. Die mit dem Grundbaukasten aufgebaute Basiskonfiguration entspricht somit einer universellen Basis, welche auch als sogenanntes Rolling Chassis für Spezialanwendungen wie Showcars oder als Aggregateträger eingesetzt werden kann.

Es kann daher bevorzugt vorgesehen sein, dass der Grundbaukasten strukturrelevante, bevorzugt alle strukturrelevanten, Module für den Aufbau der Basiskonfiguration umfasst.

Mit weiterem Vorteil kann vorgesehen sein, dass die Basiskonfiguration für ein offenes Kraftfahrzeug ausgelegt ist.

Eine Basiskonfiguration für ein offenes Kraftfahrzeug eignet sich ganz besonders als Basis für den Aufbau derivater Karosseriebauformen. So können beispielsweise durch entsprechende Dachmodule die Karosserieformen Coupé, Roadster oder Targa etc. ausgeprägt werden.

Mit weiterem Vorteil kann vorgesehen sein, dass die Fahrzeugklasse eine Sportwagenklasse ist.

Die Sportwagenklasse eignet sich ganz besonders für das Baukastensystem, da insbesondere in dieser Fahrzeugklasse die Absatzzahlen üblicherweise vergleichsweise gering sind und zudem eine Vielzahl von besonders emotionalen Konzeptfahrzeugen entwickelt wird, welche bisher oft nicht in die Serie überführt wurden.

Grundsätzlich ist jedoch auch denkbar, dass das Baukastensystem auch für andere Fahrzeugklassen, wie beispielsweise ÖPNV- oder TaaS-Fahrzeuge (Transport as a Service), Small Urban Vehicles (Kommunalfahrzeuge) oder sogenannte "People Mover" eingesetzt werden kann. Auch für diese Fahrzeugklassen ist die Basiskonfiguration ein Kraftfahrzeug, welches grundsätzlich fahrbar ist, welchem jedoch die Ausprägung hinsichtlich möglicher derivater Karosseriebauformen sowie die designtragende Ausgestaltung fehlt.

Bevorzugt kann vorgesehen sein, dass die derivate Karosseriebauform ein Coupé, ein Roadster, ein Cabrio oder ein Targa ist.

Dabei ist ferner bevorzugt vorgesehen, dass die Aufbaumodule Dachmodule, insbesondere zur Ausprägung eines Coupés, eines Roadsters, eines Cabrios oder eines Targas, sind.

Ferner kann vorgesehen sein, dass die Aufbaumodule des Derivatbaukastens nicht strukturrelevant für den Aufbau der Basiskonfiguration sind, wobei die Aufbaumodule des Derivatbaukastens bevorzugt strukturverstärkend mit den Modulen des Grundbaukastens zusammenwirken.

Die Aufbaumodule des Derivatbaukastens können somit, wenn überhaupt, höchstens strukturverstärkend mit den Modulen des Grundbaukastens zusammenwirken. Das Fehlen einer strukturrelevanten Funktion der Aufbaumodule ermöglicht es, die Entwicklungskosten und Herstellungskosten weitestgehend auf den Grundbaukasten zu verlagern.

Mit weiterem Vorteil kann vorgesehen sein, dass die Designmodule des Designbaukastens Hang-On-Komponenten bzw. Montagekomponenten umfassen oder sind.

Die Designmodule des Designbaukastens, welche gewissermaßen als Dekorationsteile die Designhülle des Kraftfahrzeuges beziehungsweise gegebenenfalls auch den Innenraum des Kraftfahrzeuges darstellen, können aufgrund ihrer Ausgestaltung als Hang-On- oder Montagebauteile schnell und einfach an die derivate Karosseriebauform an die Basiskonfiguration angebaut, montiert oder fest gefügt werden. Aufgrund des hohen Standardisierungsgrads der derivaten Karosseriebauform, welche aus den Modulen des Grundbaukastens und den Aufbaumodulen des Derivatbaukastens aufgebaut wird, können standardisierte Verbindungen der Designmodule mit der derivaten Karosseriebauform der Basiskonfiguration vorgesehen sein, wodurch ein weiterer Kosteneinsparungseffekt erzielt werden kann.

Bevorzugt ist daher vorgesehen, dass die Designmodule des Designbaukastens designtragende und/oder Dekorationskomponenten, bevorzugt ohne technische Funktion, sind.

Mit weiterem Vorteil kann vorgesehen sein, dass die Designmodule des Designbaukastens Komponenten für ein Fahrzeuginterieur, insbesondere Verkleidungen, Lenkräder, Fahrzeugkonsolen, Fahrzeugsitze, umfassen.

Die durch die Designmodule des Designbaukastens definierte designtragende Ebene des Kraftfahrzeuges kann somit auch den Fahrzeuginnenraum umfassen. Insbesondere kann durch die Komponenten bzw. die Designmodule des Designbaukastens der optische Eindruck des Fahrzeuges sowohl bezüglich des Exterieurs als auch des Interieurs fahrzeug- und markentypisch ausgeprägt werden.

Eine weitere Lösung der der Erfindung zugrundeliegenden Aufgabe besteht in einem Verfahren zur Herstellung eines Kraftfahrzeuges unter Verwendung eines vorbeschriebenen Baukastensystems, wobei eine Basiskonfiguration umfassend Basis-Karosseriestruktur, Fahrwerksstruktur und Antrieb für ein Kraftfahrzeug einer vorbestimmten Fahrzeugklasse aus den Modulen des Grundbaukastens aufgebaut wird, wobei eine derivate Karosseriebauform der Basiskonfiguration durch Anbau von Aufbaumodulen des Derivatbaukastens an die Basiskonfiguration ausgeprägt wird, und wobei ein fahrzeug- oder markenspezifischen Design durch Anbau von Designmodulen umfassend eine Fahrzeugaußenhaut des Designbaukastens an die derivate Karosseriebauform ausgeprägt wird.

Eine noch weitere Lösung der der Erfindung zugrundeliegenden Aufgabe besteht in der Bereitstellung eines Kraftfahrzeuges hergestellt mit einem vorbeschriebenen Verfahren und/oder unter Verwendung eines vorbeschriebenen Baukastensystems.

Bevorzugt ist dabei vorgesehen, dass das Kraftfahrzeug ein Sportwagen ist.

Die vorliegende Erfindung wird nachstehend näher anhand der beigefügten Figuren erläutert.

Es zeigen:
- Fig. 1: ein Baukastensystem für ein Kraftfahrzeug,
- Fig. 2: ein Ablaufdiagramm eines Verfahrens zur Herstellung eines Kraftfahrzeugs,
- Fig. 3: eine Basiskonfiguration eines Kraftfahrzeugs,
- Fig. 4: derivate Karosseriebauformen des Kraftfahrzeugs, und
- Fig. 5: ein Kraftfahrzeug mit einer designtragenden Hülle.

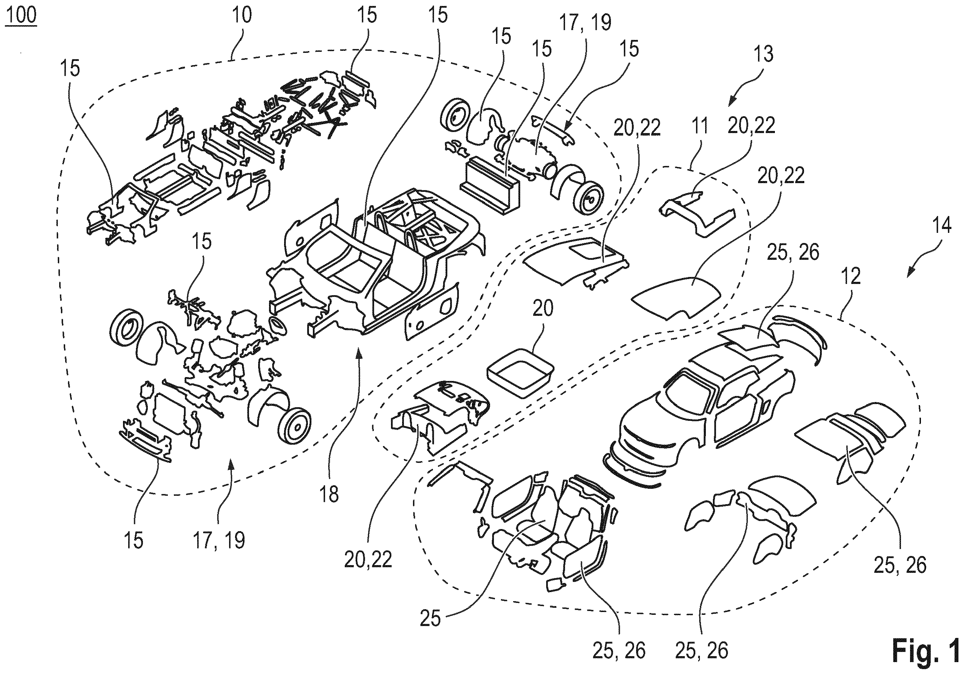

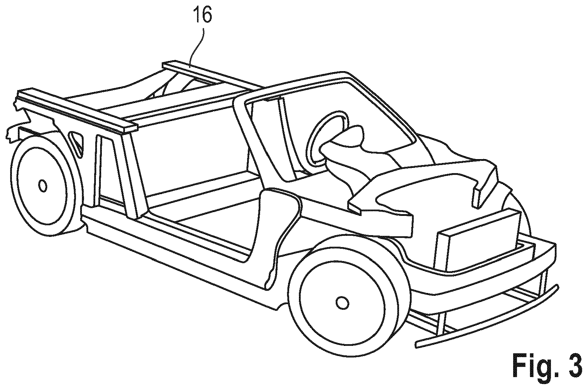

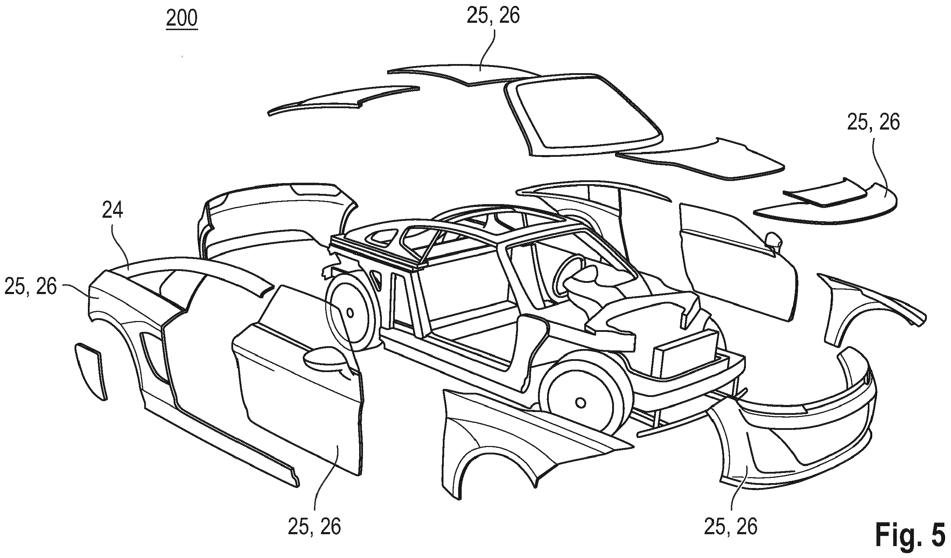

Fig. 1 zeigt ein Baukastensystem 100 für Kraftfahrzeuge im Einklang mit der vorliegenden Erfindung. Das Baukastensystem 100 umfasst einen Grundbaukasten 10, einen Derivatbaukasten 11 und einen Designbaukasten 12. Der Grundbaukasten 10 und der Derivatbaukasten 11 bilden zusammen die techniktragende Ebene 13 eines aufzubauenden Kraftfahrzeugs 200 (Fig. 5), wohingegen der Designbaukasten 12 die designtragende Ebene 14 des Kraftfahrzeugs 200 darstellt. Der Grundbaukasten 10 umfasst Komponenten und/oder Module 15 zum Aufbau mindestens einer Basiskonfiguration 16 (Fig. 3) für ein Kraftfahrzeug 200 einer vorbestimmten Fahrzeugklasse. Im dargestellten Beispiel ist als vorbestimmte Fahrzeugklasse die Sportwagenklasse vorgesehen. Der Grundbaukasten 10 umfasst dabei mindestens eine Fahrwerksstruktur 17, eine Basis-Karosseriestruktur 18 und einen Antrieb 19.

Aus den Komponenten und/oder Modulen 15 des Grundbaukastens 10 kann eine Basiskonfiguration 16 eines Kraftfahrzeugs 200 der Sportwagenklasse aufgebaut werden, wobei diese Basiskonfiguration 16 ein grundsätzlich fahrtüchtiges, jedoch nicht zulassungsfähiges Kraftfahrzeug darstellt. Insbesondere fehlt dieser Basiskonfiguration 16 jegliche fahrzeug- oder markentypische Ausgestaltung.

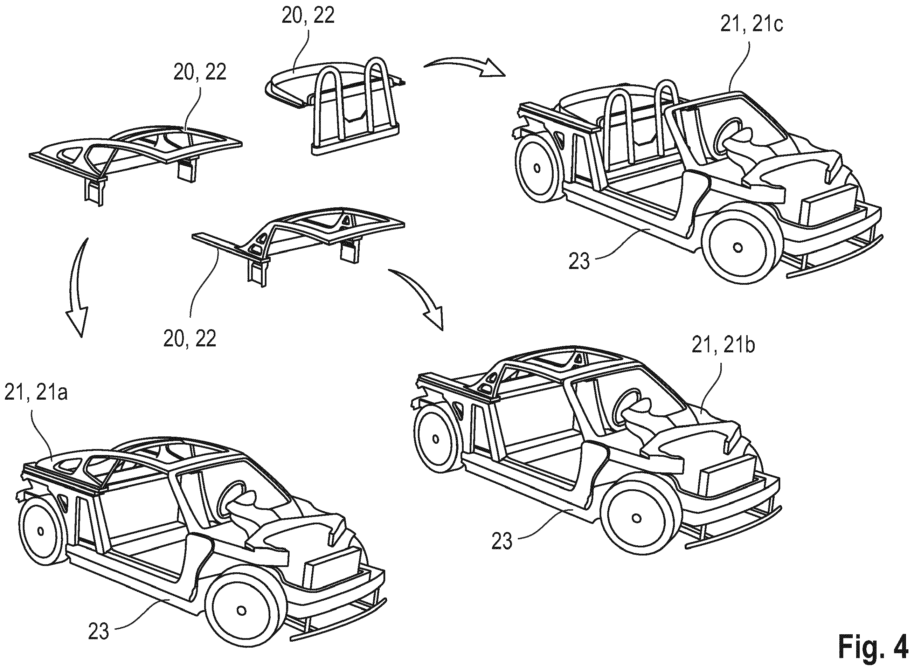

Der Derivatbaukasten 11 umfasst Aufbaumodule 20 zum Aufbau von in Fig. 4 gezeigten derivaten Karosseriebauformen 21, wie beispielsweise eines Coupés 21a, eines Targas 21b oder eines Roadsters 21c. Zu diesem Zweck ist die Basiskonfiguration 16 als ein offenes Fahrzeug konzipiert. Die Aufbaumodule 20 des Derivatbaukastens 11 sind als Dachmodule 22 ausgebildet, welche mit der Basiskonfiguration 16 kombiniert werden können, um die derivaten Karosseriebauformen 21, 21a, 21b, 21c aufzubauen. Die Aufbaumodule 20 sind dabei nicht strukturrelevant, und können höchstenfalls als strukturunterstützend aufgefasst werden. Die durch Kombination der Basiskonfiguration 16 mit den Aufbaumodulen 20 hergestellten derivaten Karosseriebauformen 21, 21a, 21b, 21c stellen im Wesentlichen techniktragende Kraftfahrzeuge 23 (Fig. 4) dar, welchen jedoch die designtragende Hülle 24 (Fig. 5) beziehungsweise das fahrzeug- oder markenspezifische Design fehlt. Hierzu dient der Designbaukasten 12, welcher Designmodule 25 zur Ausprägung eines fahrzeug- oder markenspezifischen Designs der jeweiligen derivaten Karosseriebauform 21, 21a, 21b, 21c umfasst. Die Designmodule 25 umfassen insbesondere Komponenten für ein Fahrzeugexterieur und insbesondere für eine Fahrzeugaußenhaut. Darüber hinaus kann der Designbaukasten auch Bauteile des Fahrzeuginterieurs wie Fahrzeugsitze, Innenverkleidungen, Lenkräder, Fahrzeugkonsolen etc. umfassen. Die Designmodule 25 des Designbaukastens 12 sind als designtragende und/oder Dekorationskomponenten 26 bevorzugt ohne eine technische Funktion ausgebildet und dienen ausschließlich der fahrzeug- und markenspezifischen Ausgestaltung des Kraftfahrzeugs 200.

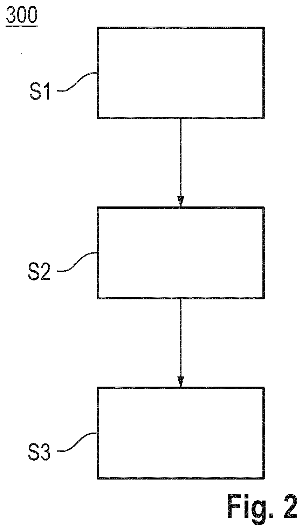

Fig. 2 zeigt ein Ablaufdiagramm für ein Verfahren 300 zur Herstellung eines Kraftfahrzeuges unter Verwendung eines Baukastensystems 100 im Einklang mit der Erfindung. Verfahrensgemäß wird in einem ersten Verfahrensschritt S1 eine Basiskonfiguration 16 umfassend Basis-Karosseriestruktur 18, Fahrwerksstruktur 17 und Antrieb 19 für ein Kraftfahrzeug 200 einer vorbestimmten Fahrzeugklasse aus den Modulen 15 des Grundbaukastens 10 aufgebaut. In einem zweiten Verfahrensschritt S2 wird eine derivate Karosseriebauform 21, 21a, 21b, 21c der Basiskonfiguration 16 durch Anbau von Aufbaumodulen 20 des Derivatbaukastens 11 an die Basiskonfiguration 16 ausgeprägt. In einem daran anschließenden dritten Verfahrensschritt S3 wird ein fahrzeug- oder markenspezifisches Design durch Anbau von Designmodulen 25 des Designbaukastens 12 umfassend eine Fahrzeugaußenhaut an die derivate Karosseriebauform 21, 21a, 21b, 21c ausgeprägt.

### Bezugszeichenliste

- 100: Baukastensystem für Kraftfahrzeuge
- 200: Kraftfahrzeug
- 300: Verfahren

- 10: Grundbaukasten
- 11: Derivatbaukasten
- 12: Designbaukasten
- 13: Techniktragende Ebene
- 14: Designtragende Ebene
- 15: Modul
- 16: Basiskonfiguration
- 17: Fahrwerksstruktur
- 18: Basis-Karosseriestruktur
- 19: Antrieb
- 20: Aufbaumodul
- 21: Derivate Karosseriebauform
- 21a: Coupé
- 21b: Targa
- 21c: Roadster
- 22: Dachmodul
- 23: Techniktragendes Kraftfahrzeug
- 24: Designtragende Hülle
- 25: Designmodul
- 26: Dekorationskomponente
- S1: Verfahrensschritt
- S2: Verfahrensschritt
- S3: Verfahrensschritt

## Patentansprüche

1. Baukastensystem (100) für Kraftfahrzeuge (200), insbesondere für batterieelektrische Kraftfahrzeuge, umfassend einen Grundbaukasten (10), einen Derivatbaukasten (11) und einen Designbaukasten (12), wobei der Grundbaukasten (10) Module (15) zum Aufbau mindestens einer Basiskonfiguration (16) für ein Kraftfahrzeug (200) einer vorbestimmten Fahrzeugklasse umfasst, wobei die Module (15) des Grundbaukastens (10) eine Basis-Karosseriestruktur (18), eine Fahrwerksstruktur (17) und einen Antrieb (19) umfassen, wobei der Derivatbaukasten (11) Aufbaumodule (20) zur Ausprägung mindestens einer derivaten Karosseriebauform (21, 21a, 21b, 21c) der Basiskonfiguration (16) umfasst, und wobei der Designbaukasten (12) Designmodule (25) zur Ausprägung mindestens eines fahrzeug- oder markenspezifischen Designs der derivaten Karosseriebauform (21, 21a, 21b, 21c) umfasst, wobei die Designmodule (25) Komponenten für ein Fahrzeugexterieur umfassend eine Fahrzeugaußenhaut umfassen.

2. Baukastensystem (100) nach Anspruch 1, wobei der Grundbaukasten (10) Module (15) zum Aufbau genau einer Basiskonfiguration (16) für ein Kraftfahrzeug (200) der vorbestimmten Fahrzeugklasse umfasst, und/oder wobei die Basis-Karosseriestruktur (18) eine einheitliche und/oder universelle Karosseriezelle für ein Kraftfahrzeug (200) der vorbestimmten Fahrzeugklasse ist.

3. Baukastensystem (100) nach Anspruch 1 oder 2, wobei der Grundbaukasten (10) einen Plattformbaukasten umfasst, wobei der Plattformbaukasten Plattformmodule für die Fahrwerksstruktur (17) und/oder für den Antrieb (19) umfasst.

4. Baukastensystem (100) nach einem der vorgenannten Ansprüche, wobei die Basiskonfiguration (16) ein fahrbares Kraftfahrzeug ist, und/oder wobei der Grundbaukasten (10) strukturrelevante, bevorzugt alle strukturrelevanten, Module (15) für den Aufbau der Basiskonfiguration (16) umfasst.

5. Baukastensystem (100) nach einem der vorgenannten Ansprüche, wobei die Basiskonfiguration (16) für ein offenes Kraftfahrzeug ausgelegt ist, und/oder wobei die Fahrzeugklasse eine Sportwagenklasse ist, und/oder wobei die derivate Karosseriebauform (21, 21a, 21b, 21c) ein Coupé (21a), ein Roadster (21c), ein Cabrio oder ein Targa (21b) ist, und/oder wobei die Aufbaumodule (20) Dachmodule (22), insbesondere zur Ausprägung eines Coupés (21a), eines Roadsters (21c), eines Cabrios oder eines Targas (21 b), sind.

6. Baukastensystem (100) nach einem der vorgenannten Ansprüche, wobei die Aufbaumodule (20) des Derivatbaukastens (11) nicht strukturrelevant für den Aufbau der Basiskonfiguration (16) sind, wobei die Aufbaumodule (20) des Derivatbaukastens (11) bevorzugt strukturverstärkend mit den Modulen (15) des Grundbaukastens (10) zusammenwirken.

7. Baukastensystem (100) nach einem der vorgenannten Ansprüche, wobei die Designmodule (25) des Designbaukastens (12) Hang-On-Komponenten bzw. Montagekomponenten umfassen oder sind, und/oder wobei die Designmodule (25) des Designbaukastens (12) designtragende und/oder Dekorationskomponenten (26), bevorzugt ohne technische Funktion, sind.

8. Baukastensystem (100) nach einem der vorgenannten Ansprüche, wobei die Designmodule (25) des Designbaukastens (12) Komponenten für ein Fahrzeuginterieur, insbesondere Verkleidungen, Lenkräder, Fahrzeugkonsolen, Fahrzeugsitze, umfassen.

9. Verfahren (300) zur Herstellung eines Kraftfahrzeugs (200) unter Verwendung eines Baukastensystems (100) nach einem der vorgenannten Ansprüche, wobei eine Basiskonfiguration (16) umfassend Basis-Karosseriestruktur (18), Fahrwerksstruktur (17) und Antrieb (19) für ein Kraftfahrzeug (200) einer vorbestimmten Fahrzeugklasse aus den Modulen (15) des Grundbaukastens (10) aufgebaut wird, wobei eine derivate Karosseriebauform (21, 21a, 21b, 21c) der Basiskonfiguration (16) durch Anbau von Aufbaumodulen (20) des Derivatbaukastens (11) an die Basiskonfiguration (16) ausgeprägt wird, und wobei ein fahrzeug- oder markenspezifisches Design durch Anbau von Designmodulen (25) umfassend eine Fahrzeugaußenhaut des Designbaukastens (12) an die derivate Karosseriebauform (21, 21a, 21b, 21c) ausgeprägt wird.

10. Kraftfahrzeug (200) hergestellt mit einem Verfahren (300) nach Anspruch 9 und/oder unter Verwendung eines Baukastensystems (100) nach einem der Ansprüche 1 bis 8.
